# EUROPEAN PATENT SPECIFICATION

(11) **EP 3 561 318 B1**
(45) Date of publication and mention of the grant of the patent: **06.04.2022**
(21) Application number: 18382273.3
(22) Date of filing: 23.04.2018
(51) Int. Cl.: F16B 19/10

(54) **BAYONET FASTENER ASSEMBLY**
BAJONETTVERSCHLUSSANORDNUNG
ENSEMBLE DE FIXATION À BAÏONNETTE

(43) Date of publication of application: 30.10.2019
(73) Proprietor: A. Raymond et Cie, 38000 Grenoble (FR)
(72) Inventor: Pacho Millán Sandra, 08120 La Llagosta (ES)
(74) Representative: Tilmann, Max Wilhelm

(56) References cited:
- WO-A1-2014/137773
- US-A1- 2007 253 794
- US-B2- 7 207 758

## Description

### FIELD OF THE INVENTION

The present disclosure generally relates to a bayonet fastener assembly and, more specifically, to fasteners provided with elastic feet adapted to be urged apart to effect affixation within an opening of predetermined contour. The fasteners may be used for securing a component to a panel defining one or more panel openings.

### DESCRIPTION OF THE RELATED ART

Bayonet fastener assemblies are used in various industries to secure one or more components to a panel. In the automotive industry, for example, a bayonet fastener may be used to fix one component to another in a vehicle assembly.

Known bayonet fastener assemblies include an anchor and a pin that is introduced into the anchor. The anchor generally includes flexible longitudinal portions that, in the absence of urging, assume a resting position in which they can be introduced into an opening in a support. The pin can be introduced through the anchor and rotated by a fraction of a turn to attain a locking configuration in which the longitudinal portions are urged apart against the walls of the opening. These fasteners may be unlocked by again rotating the pin through a fraction of a turn such that the rotation of the pin effects a discontinuation of the urging apart of the longitudinal portions. These fasteners are typically manufactured of metallic materials susceptible to corrosion and require special tools for assembly or include a non-intuitive assembly process.

Despite their advantages, known bayonet fastener assemblies are not readily disassembled, and therefore not fully reusable. Moreover, known bayonet fastener assemblies are susceptible to accidental rotation of the pin during use, which could lead to accidental unlocking and failure of the fastener during use. Additionally, many known bayonet fastener assemblies include a complex design that introduces economically burdensome manufacturing challenges. Accordingly, there exists a continued need for an improved and simplified reusable bayonet fastener assembly that resistant to accidental release by rotation during use. WO2014/137773A1 refers to a fastener including an insertable pin for receipt within a body to force apart a pair of locking legs on the body to a first degree for use in securing the body to an opening in an airbag assembly or other structure and to a second degree for attachment within a receiving opening in a vehicle roof rail or other support structure. The body has first and second body components which mate one against another for capturing a portion of the assembly therebetween when the pin is inserted and retained to a first degree. Thereafter, the pin may be lockingly inserted and retained to the second degree more deeply within the body so as to spread and hold the legs in locking relation within the receiving opening.

From US 2007/0253794 A1 and US7, 207,758 B1 bayonet fastener assemblies are known.

### SUMMARY OF THE INVENTION

An improved bayonet fastener assembly is provided. In a first embodiment, the bayonet fastener assembly includes a pin including a head and a rod extending longitudinally therefrom. The head defines a tool recess and the rod includes a locking tab proximal to the head. The bayonet fastener assembly also includes an expansion anchor that includes a locking portion and an expansion sleeve extending longitudinally therefrom. The locking portion defines a slot for the locking tab and the expansion sleeve includes first and second longitudinal portions that are spaced apart from each other. Rotation of the pin within the expansion anchor causes the locking tab to engage the slot in the locking portion to thereby prevent retraction of the pin from the expansion anchor.

In an alternative embodiment, the rod further includes an expansion element distal from the head and extending radially from the rod such that rotation of the pin within the expansion anchor causes the expansion element to engage at least one of the first and second longitudinal portions to thereby outwardly expand the expansion sleeve.

In another embodiment, the locking tab of the bayonet fastener assembly includes an arm extending radially from the rod proximal to the head. In a further embodiment, the slot of the bayonet fastener assembly includes an annular channel that engages the locking tab by snap-fit. In still another embodiment, the locking portion serves to limit rotation of the locking tab so that the rod is seated in a predetermined manner within the expansion anchor. An additional embodiment includes as the expansion element a first cam extending from the rod and a second cam extending from the rod opposite the first cam.

In another embodiment, rotation of the pin within the expansion anchor causes the first and second cams to maximally press against the first and second longitudinal portions to cause the first and second longitudinal portions to flex outwardly. According to the invention, the expansion sleeve includes an outer diameter that varies along its length and has a maximum diameter. Preferably, the maximum diameter occurs at a location distal to the locking portion.

The first and second longitudinal portions are adapted to flex inwardly toward one another when the expansion anchor is inserted into the opening to thereby temporarily decrease the maximum diameter of the expansion sleeve. In a further embodiment, the locking portion is disk-shaped and includes first and second opposing channels defined in an annular side surface thereof. In still another embodiment, the first and second opposing channels intersect a central opening extending through the expansion anchor. In one embodiment, the locking portion includes a first raised portion disposed in the first channel to secure the locking tab by snap-fit. In another embodiment, the locking portion includes a second raised portion disposed in the second channel to secure the locking tab by snap fit. A further embodiment includes a second locking tab opposite the first locking tab.

As described further below, the bayonet fastener assembly has an intuitive and ergonomic assembly and may be readily inserted into and fixed within an opening more quickly than known bayonet fasteners and by hand without the need for special tools. The bayonet fastener assembly also facilitates cost savings by its ease of manufacture, which is facilitated by its simplified design and by virtue of its material construction, optionally of polymeric materials, obviating the need for painting to prevent corrosion. Moreover, the locking tab of the bayonet fastener assembly facilitates proper assembly of the bayonet fastener by a user and, once rotated into a locked position, helps to ensure that the bayonet faster maintains a locked configuration within a panel.

These and other features and advantages of the present disclosure will become apparent from the following description of particular embodiments, when viewed in accordance with the accompanying drawings and appended claims.

### DESCRIPTION OF THE DRAWINGS

Figure 1 is a perspective view of the bayonet fastener assembly with the rod aligned for insertion through the expansion anchor;
Figure 2 is a perspective view of the bayonet fastener assembly inserted within a panel and in an unlocked configuration;
Figure 3 is a perspective view of the bayonet fastener assembly inserted within a panel and in a locked configuration;
Figure 4 is a partial side elevation view of the bayonet fastener assembly in a locked configuration;
Figure 5 is a bottom view of the bayonet fastener assembly in an unlocked configuration;
Figure 6 is a partial perspective view of the bayonet fastener in an unlocked configuration showing the rod and the expansion sleeve; and
Figure 7 is a partial perspective view of the bayonet fastener in a locked configuration showing the rod and the expansion sleeve.

### DETAILED DESCRIPTION OF THE INVENTION

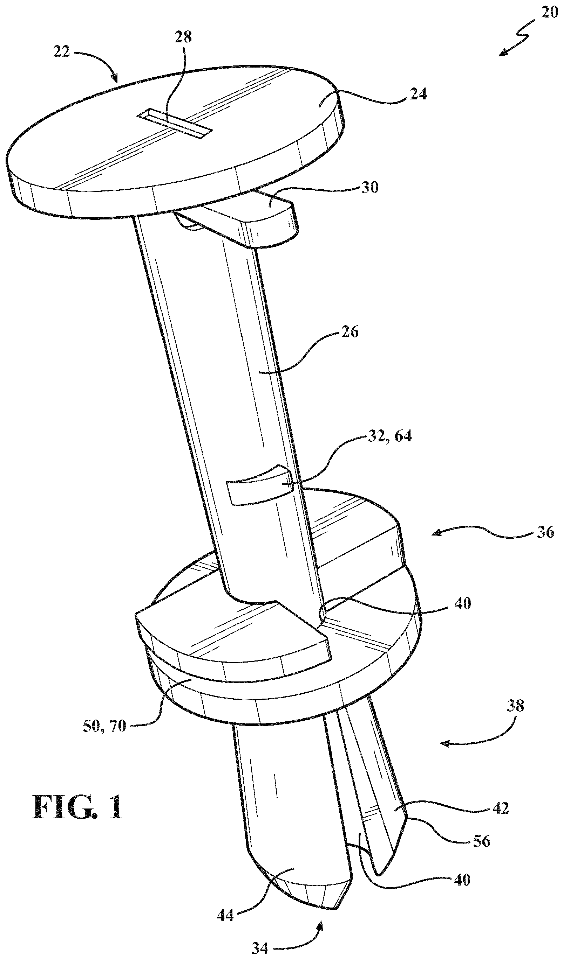

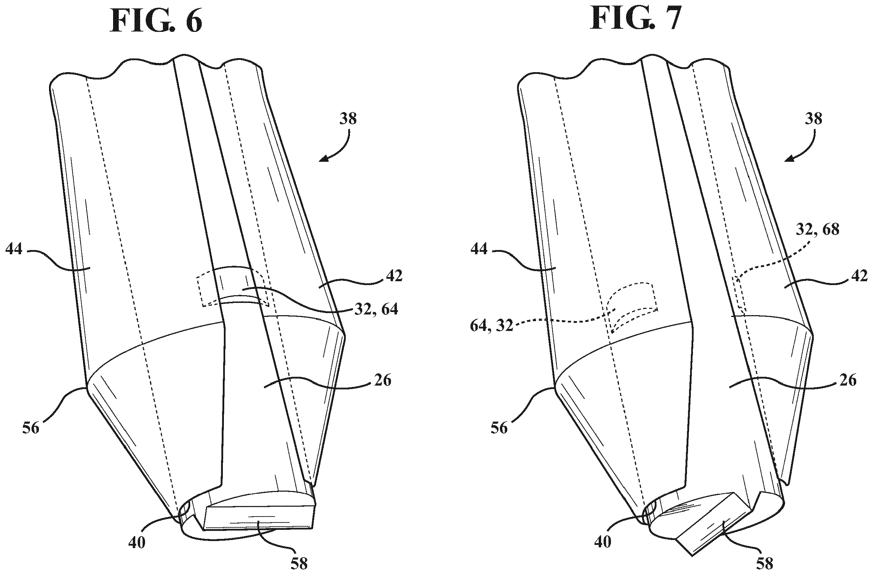

Referring to Figures 1-7, wherein like numerals indicate corresponding parts throughout the several views, a bayonet fastener assembly is illustrated and generally designated 20. Certain features of the bayonet fastener assembly 20 are functional, but can be implemented in different aesthetic configurations. The bayonet fastener assembly 20 is configured to be disposed (e.g. inserted) within an aperture 46 defined by a panel 62 for securing a component (not shown) to the panel 62.

More specifically, the bayonet fastener assembly 20 generally includes a pin 22 that includes a head 24 and a rod 26 extending longitudinally therefrom. There is no limitation on the shape of the rod 26, but in the present embodiment it has a cylindrical shape along its length and terminates at a tapered or pointed end 58 distal the head 24. The head defines a tool recess 28. The tool recess 28 is configured to accommodate the drive heads of various rotational tools including, but not limited to, slotted drive heads, Phillips drive heads, square drive heads, Allen drive heads, and torx drive heads.

The rod 26 includes a first locking tab 30 proximal to the head 24 and, in certain embodiments, an expansion element 32 distal from the head 24 and extending radially from the rod 26. In alternative embodiments, however, the bayonet fastener assembly 20 may omit the expansion element 32. For example, in such alternative embodiments, the bayonet fastener assembly 20 may include an expansion rivet, or an alternative element altogether, in lieu of the expansion element as described herein. However, the bayonet fastener assembly 20 typically includes the expansion element 32. In one embodiment, the first locking tab 30 includes a first arm extending radially from the rod 26 proximal to the head 24. The expansion element 32 in one embodiment is a first annular flange or cam 64 and a second annular flange or cam 68 extending from the rod 26 distal to the head 24. The locking tab 30 is radially aligned with but axially offset from the expansion element 32.

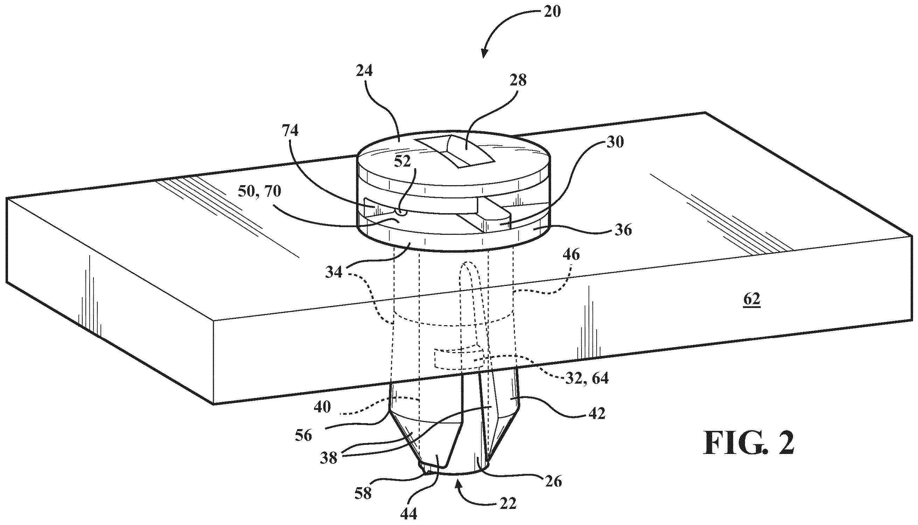

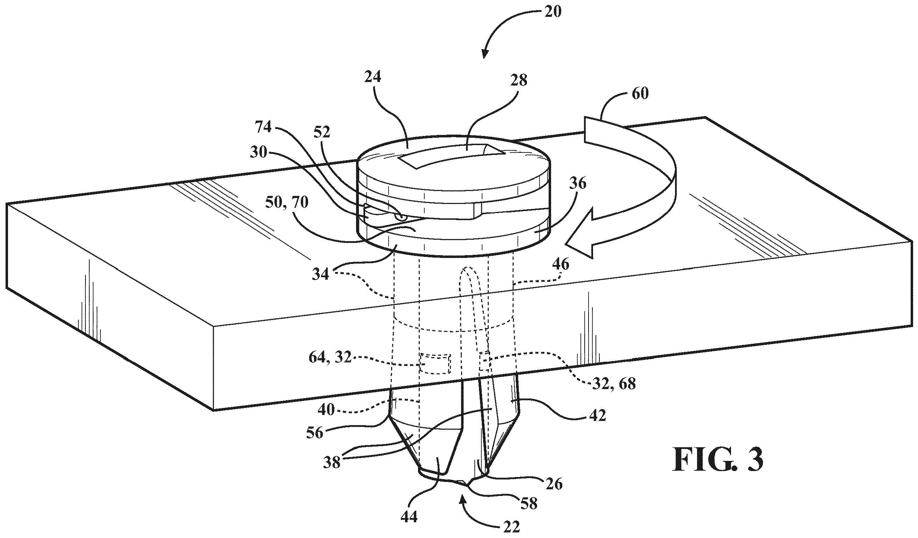

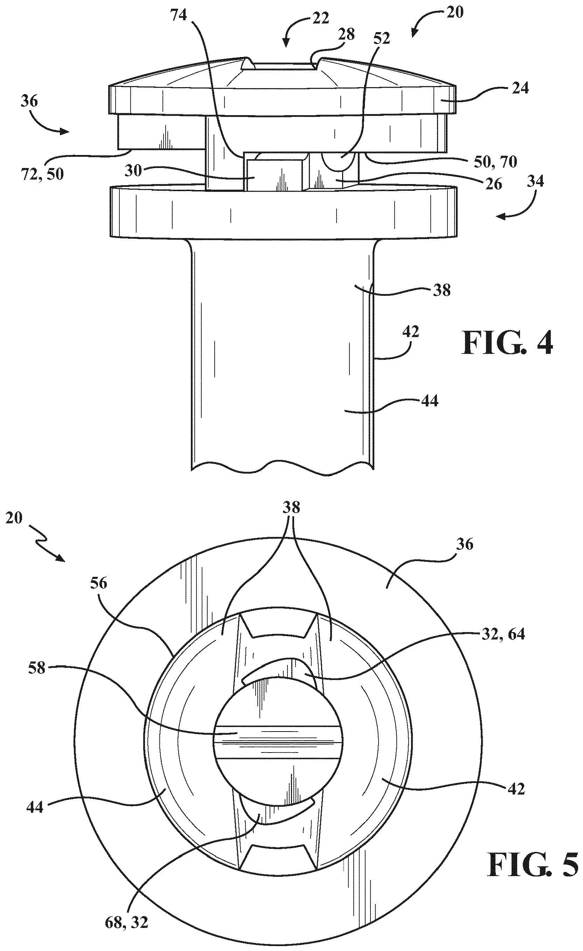

The bayonet fastener assembly 20 further includes an expansion anchor 34 that includes a locking portion 36 that is optionally disc shaped and an expansion sleeve 38 extending longitudinally therefrom. The expansion sleeve 38 includes first and second longitudinal portions 42, 44 spaced apart from each other. The expansion sleeve 38 includes an outer diameter that varies along its length and defines a maximum diameter at a location 56 distal from the locking portion 36. The locking portion 36 defines a slot 50 for receiving the first locking tab 30. The slot 50 is defined in an annular side surface of the locking portion 36, and engages the first locking tab 30 by snap-fit. The slot 50 of the locking portion 36 is so configured as to restrict positioning of the first locking tab 30, such that the rod 26 must be inserted within the expansion anchor 34 in a predetermined orientation. As shown in Figures 2 and 4, the slot 50 includes on a horizontal surface thereof a first raised portion 52, alternatively referred to as a first protrusion 52, taking the form in one embodiment of a hemispherical bump. The first protrusion 52 is so configured as to locally obstruct movement of the first locking tab 30 past a point in the slot 50 such that the locking tab 30 may not move past the first protrusion 52 without exertion of a force by a user. The first protrusion 52 is further disposed within the slot 50 such that when the first locking tab 30 is forced past the first protrusion 52 into a locked position, as shown in Figures 3 and 4, by snap-fit, the first locking tab 30 is obstructed from further rotational movement within the slot 50 by the first protrusion 52 in cooperation with an end surface 74 of the slot 50.

As shown in Figure 4, the slot 50 may include a first annular channel 70 and a second annular channel 72 opposing the first annular channel 70, each being defined in the annular side surface of the locking portion 36. The first and second annular channels 70, 72 intersect a central opening 40 (shown in Figure 1) extending through the expansion anchor 34. The first annular channel 70 includes the first protrusion 52 for securing the first locking tab 30, as described above, and the second annular channel 72 includes a second protrusion (not shown) for securing the first locking tab 30 in the same manner as described above for the first protrusion 52. The rod 26 can also include a second locking tab (not shown) opposite the first locking tab 30, such that when the first locking tab 30 is secured by snap fit within the first annular channel 70 the second locking tab is secured by snap fit within the second annular channel 72.

In operation, the expansion sleeve 38 is inserted into the aperture 46 in the panel 62, or first through a second aperture in a component (not shown) and then through the aperture 46 to secure the component to the panel 62. The maximum outer diameter of the expansion sleeve 38 is larger than the diameter of the panel aperture 46 such that insertion of the expansion sleeve 38 through the aperture 46 causes the first and second longitudinal portions 42, 44 to flex inwardly toward one another when the expansion sleeve 38 is inserted into the aperture 46, so as to temporarily decrease the maximum diameter of the expansion sleeve 38 so that it may fit through the aperture 46. Since, during insertion, the shape of a cross section of the expansion sleeve 38 will vary from true circular, the term "diameter" is used in this context herein to refer to the distance spanned by a line intersecting a perimeter of a planar cross section of the expansion sleeve 38 and passing through a center of gravity of the cross section. The first and second longitudinal portions 42, 44 are adapted to flex inwardly toward one another. Insertion of the expansion sleeve 38 is complete when the locking portion 36 of the expansion anchor 34 contacts the panel 62, or sandwiches the component to the panel 62, and thereby prevents further insertion of the expansion sleeve 38.

Once the expansion sleeve 38 has been inserted into the panel 62, the rod 26 of the pin 22 is inserted through the central opening 40 extending through the expansion element 32. To insert the rod 26 of the pin 22 through the expansion element 32, it is first necessary to align the first locking tab 30 with the slot 50 defined by the locking portion 36 of the expansion element 32, such that the first locking tab 30 is aligned with and can be disposed within the slot 50. Once the first locking tab 30 is properly aligned with the slot 50, the rod 26 is inserted through the expansion element 32 until further insertion is prevented by the head 24 coming into physical contact with the expansion anchor 34, or a component sandwiched therebetween (not shown).

To lock the bayonet fastener assembly 20 securely within the aperture 46 of the panel 62, a user uses a tool (not shown) to engage the tool recess 28 and rotate the pin 22 such that the first locking tab 30 moves through the first annular channel 70. The first locking tab 30 continues to move through the first annular channel 70 until contacting the first protrusion 52. At this point, the user applies a force to the pin 22 (e.g. with the tool) to encourage the first locking tab 30 past the first protrusion 52, such that the first locking tab 30 passes beyond the first protrusion 52 and thereby becomes secured into a particular configuration by snap-fit, as described above. When this occurs, the bayonet fastener assembly 20 is in a locked configuration. When the rod 26 also includes the second locking tab (not shown) opposite the first locking tab 30, the rotation of the pin 22 described above simultaneously causes the second locking tab to move through the second annular channel 72 until contacting the second protrusion (not shown) of the second annular channel 72, until the user applies the force to the pin 22 to encourage the second locking tab past the second protrusion, thereby securing the second locking tab in the second annular channel 72 by snap-fit.

As the pin 22 is rotated so that the first locking tab 30 will achieve snap-fit within the first annular channel 70, the expansion element 32 simultaneously comes into contact with at least one of the first or second longitudinal portions 42, 44 of the expansion sleeve 38 and causes outward flexion thereof. Maximum outward flexion occurs when the bayonet fastener assembly 20 is in the locked configuration described above. The outward flexion of the first or second longitudinal portion 42, 44 of the expansion sleeve 38 functions to fix the bayonet fastener assembly 20 within the aperture 46 of the panel 62 and further causes the expansion sleeve 38 to press against walls of the aperture 46 thereby ensuring a tight fit resistant to motion in response to various forces imposed upon the bayonet fastener assembly 20.

The various elements of the components of the spacer 20 described above, e.g. the pin 22 and the expansion anchor 34, may be manufactured of the same or different material(s), such as any one or more of the materials described below. Moreover, each element may itself comprise a combination of different materials, and thus may not comprise a homogeneous composition throughout. In general, materials suitable for use in or as the pin 22 and the expansion anchor 34 include metals (e.g. steels, aluminums, alloys, etc.), resins (e.g. thermoset and/or thermoplastic resins), and combinations thereof. However, myriad materials may be used to manufacture the elements of the bayonet fastener assembly 20, each typically selected as a function of availability, cost, performance/end use applications, etc. Moreover, metals and metals and resins are not exhaustive of suitable materials that may be used.

In some embodiments, the pin 22 and the expansion anchor 34 each independently comprise an independently selected resin. Examples of suitable resins typically comprise the reaction product of a monomer and a curing agent, although resins formed of self-polymerizing monomers (i.e., those acting as both a monomer and a curing agent) may also be utilized. It is to be appreciated that such resins are conventionally named/identified according to a particular functional group present in the reaction product. For example, the term "polyurethane resin" represents a polymeric compound comprising a reaction product of an isocyanate (i.e., a monomer) and a polyol (i.e., a chain extender/ curing agent). The reaction of the isocyanate and the polyol create urethane functional groups, which were not present in either of the unreacted monomer or curing agent. However, it is also to be appreciated that, in certain instances, resins are named according to a particular functional group present in the monomer (i.e., a cure site). For example, the term "epoxy resin" represents a polymeric compound comprising a cross-linked reaction product of a monomer having one or more epoxide groups (i.e., an epoxide) and a curing agent. However, once cured, the epoxy resin is no longer an epoxy, or no longer includes epoxide groups, but for any unreacted or residual epoxide groups (i.e., cure sites), which may remain after curing, as understood in the art. In other instances, however, resins may be named according to a functional group present in both the monomer and the reaction product (i.e., an unreacted functional group).

In some embodiments, the resin is selected from thermoset resins and thermoplastic resins. Examples of suitable thermoset and/or thermoplastic resins typically include polyamides (PA), such as Nylons; polyesters such as polyethylene terephthalates (PET), polybutylene terephthalates (PET), polytrimethylene terephthalates (PTT), polyethylene naphthalates (PEN), liquid crystalline polyesters, and the like; polyolefins such as polyethylenes (PE), polypropylenes (PP), polybutylenes, and the like; styrenic resins; polyoxymethylenes (POM); polycarbonates (PC); polymethylenemethacrylates (PMMA); polyvinyl chlorides (PVC); polyphenylene sulfides (PPS); polyphenylene ethers (PPE); polyimides (PI); polyamideimides (PAI); polyetherimides (PEI); polysulfones (PSU); polyethersulfones; polyketones (PK); polyetherketones (PEK); polyetheretherketones (PEEK); polyetherketoneketones (PEKK); polyarylates (PAR); polyethernitriles (PEN); resol-type; urea (e.g. melamine-type); phenoxy resins; fluorinated resins, such as polytetrafluoroethylenes; thermoplastic elastomers, such as polystyrene types, polyolefin types, polyurethane types, polyester types, polyamide types, polybutadiene types, polyisoprene types, fluoro types, and the like; and copolymers, modifications, and combinations thereof.

## Claims

1. A bayonet fastener assembly (20), comprising:
a pin (22) including a head (24) and a rod (26) extending longitudinally therefrom, the rod (26) including a locking tab (30) proximal the head (24); and
an expansion anchor (34) including a locking portion (36) and an expansion sleeve (38) extending longitudinally therefrom, the locking portion (36) defining a slot (50) for the locking tab (30), the expansion sleeve (38) including first and second longitudinal portions (42, 44) that are spaced apart from each other;
wherein rotation of the pin (22) within the expansion anchor (34) causes the locking tab (30) to engage the slot (50) to thereby prevent retraction of the pin (22) from the expansion anchor (34), wherein the expansion sleeve (38) includes an outer diameter that varies along its length and comprises a maximum diameter, and wherein the first and second longitudinal portions (42, 44) are adapted to flex inwardly toward one another when the expansion anchor (34) is inserted into an opening to thereby temporarily decrease the maximum diameter of the expansion sleeve (38)

2. The bayonet fastener assembly (20) of claim 1, wherein the pin (22) further includes an expansion element (32) distal from the head and extending radially from the rod (26), and wherein rotation of the pin (22) within the expansion anchor (34) causes the expansion element (32) to engage at least one of the first and second longitudinal portions (42, 44) to thereby outwardly expand the expansion sleeve (38).

3. The bayonet fastener assembly (20) of claim 2, wherein the expansion element (32) is a first cam (64), and the rod (26) further including a second cam (68) opposite the first cam (64).

4. The bayonet fastener assembly (20) of claim 3, wherein rotation of the pin (22) within the expansion anchor (34) causes the first and second cams (64, 68) to maximally press against the first and second longitudinal portions (42, 44), causing the first and second longitudinal portions (42, 44) to flex outwardly.

5. The bayonet fastener assembly (20) of any one of claims 1-4, wherein the locking tab (30) includes an arm extending radially from the rod (26) proximal the head (24).

6. The bayonet fastener assembly (20) of any one of claims 1-5, wherein the slot (50) includes an annular channel that engages the locking tab (30) by snap-fit.

7. The bayonet fastener assembly (20) of any one of claims 1-6, wherein the locking portion (36) limits rotation of the locking tab (30) such that the rod (26) is seated in a predetermined manner within the expansion anchor (34).

8. The bayonet fastener assembly (20) of claim 1, wherein the maximum diameter is located distal from the locking portion (36) along the length of the expansion sleeve.

9. The bayonet fastener assembly (20) of any one of claims 1-8, wherein the locking portion (36) is disk-shaped and the slot (50) includes first and second opposing channels (70, 72) each defined in annular side surfaces thereof.

10. The bayonet fastener assembly (20) of claim 9, wherein the first and second opposing channels (70, 72) intersect a central opening (40) extending through the expansion anchor (34).

11. The bayonet fastener assembly (20) of claim 9 or 10, wherein the locking portion (36) includes a first raised portion (52) disposed in the first channel (70) to secure the locking tab (30) by snap fit.

12. The bayonet fastener assembly (20) of any one of claims 9 to 11, wherein the locking portion (36) includes a second raised portion disposed in the second channel (72) to secure the locking tab (30) by snap fit.

13. The bayonet fastener assembly (20) of any one of claims 1 to 12, wherein the locking tab (30) is a first locking tab, the rod (26) further including a second locking tab opposite of the first locking tab.

## Patentansprüche

1. Bajonettverschlussanordnung (20), umfassend:
einen Stift (22), der einen Kopf (24) und eine Stange (26) beinhaltet, die sich längs davon erstreckt, wobei die Stange (26) eine Verriegelungslasche (30) proximal zu dem Kopf (24) beinhaltet; und
einen Expansionsanker (34), der einen Verriegelungsabschnitt (36) und eine Expansionshülse (38) beinhaltet, die sich längs davon erstreckt, wobei der Verriegelungsabschnitt (36) einen Schlitz (50) für die Verriegelungslasche (30) definiert, wobei die Expansionshülse (38) einen ersten und einen zweiten Längsabschnitt (42, 44) beinhaltet, die voneinander beabstandet sind;
wobei Drehung des Stiftes (22) innerhalb des Expansionsankers (34) bewirkt, dass die Verriegelungslasche (30) den Schlitz (50) in Eingriff nimmt, um dadurch Zurückziehen des Stiftes (22) aus dem Expansionsanker (34) zu verhindern, wobei die Expansionshülse (38) einen Außendurchmesser beinhaltet, der entlang seiner Länge variiert und einen maximalen Durchmesser umfasst, und wobei der erste und der zweite Längsabschnitt (42, 44) ausgelegt sind, um sich nach innen zueinander zu biegen, wenn der Expansionsanker (34) in eine Öffnung eingeführt wird, um dadurch vorübergehend den maximalen Durchmesser der Expansionshülse (38) zu verringern.

2. Bajonettverschlussanordnung (20) nach Anspruch 1, wobei der Stift (22) ferner ein Expansionselement (32) beinhaltet, das distal von dem Kopf ist und sich radial von der Stange (26) erstreckt, und wobei Drehung des Stiftes (22) innerhalb des Expansionsankers (34) bewirkt, dass das Expansionselement (32) zumindest eines von dem ersten und dem zweiten Längsabschnitt (42, 44) in Eingriff nimmt, um dadurch die Expansionshülse (38) nach außen zu expandieren.

3. Bajonettverschlussanordnung (20) nach Anspruch 2, wobei das Expansionselement (32) eine erste Nocke (64) ist und die Stange (26) ferner eine zweite Nocke (68) gegenüber der ersten Nocke (64) beinhaltet.

4. Bajonettverschlussanordnung (20) nach Anspruch 3, wobei Drehung des Stiftes (22) innerhalb des Expansionsankers (34) bewirkt, dass die erste und die zweite Nocke (64, 68) maximal gegen den ersten und den zweiten Längsabschnitt (42, 44) drücken, wodurch bewirkt wird, dass sich der erste und der zweite Längsabschnitt (42, 44) nach außen biegen.

5. Bajonettverschlussanordnung (20) nach einem der Ansprüche 1-4, wobei die Verriegelungslasche (30) einen Arm beinhaltet, der sich radial von der Stange (26) proximal zu dem Kopf (24) erstreckt.

6. Bajonettverschlussanordnung (20) nach einem der Ansprüche 1-5, wobei der Schlitz (50) einen ringförmigen Kanal beinhaltet, der die Verriegelungslasche (30) durch Schnapppassung in Eingriff nimmt.

7. Bajonettverschlussanordnung (20) nach einem der Ansprüche 1-6, wobei der Verriegelungsabschnitt (36) Drehung der Verriegelungslasche (30) begrenzt, sodass die Stange (26) in einer vorbestimmten Weise innerhalb des Expansionsankers (34) sitzt.

8. Bajonettverschlussanordnung (20) nach Anspruch 1, wobei sich der maximale Durchmesser distal von dem Verriegelungsabschnitt (36) entlang der Länge der Expansionshülse befindet.

9. Bajonettverschlussanordnung (20) nach einem der Ansprüche 1-8, wobei der Verriegelungsabschnitt (36) scheibenförmig ist und der Schlitz (50) einen ersten und einen zweiten gegenüberliegenden Kanal (70, 72) beinhaltet, die jeweils in ringförmigen Seitenflächen davon definiert sind.

10. Bajonettverschlussanordnung (20) nach Anspruch 9, wobei der erste und der zweite gegenüberliegende Kanal (70, 72) eine zentrale Öffnung (40) schneiden, die sich durch den Expansionsanker (34) erstreckt.

11. Bajonettverschlussanordnung (20) nach Anspruch 9 oder 10, wobei der Verriegelungsabschnitt (36) einen ersten erhabenen Abschnitt (52) beinhaltet, der in dem ersten Kanal (70) angeordnet ist, um die Verriegelungslasche (30) durch Schnapppassung zu sichern.

12. Bajonettverschlussanordnung (20) nach einem der Ansprüche 9 bis 11, wobei der Verriegelungsabschnitt (36) einen zweiten erhabenen Abschnitt beinhaltet, der in dem zweiten Kanal (72) angeordnet ist, um die Verriegelungslasche (30) durch Schnapppassung zu sichern.

13. Bajonettverschlussanordnung (20) nach einem der Ansprüche 1 bis 12, wobei die Verriegelungslasche (30) eine erste Verriegelungslasche ist, wobei die Stange (26) ferner eine zweite Verriegelungslasche gegenüber der ersten Verriegelungslasche beinhaltet.

## Revendications

1. Ensemble de fixation à baïonnette (20), comprenant :
une goupille (22) comprenant une tête (24) et une tige (26) s'étendant longitudinalement à partir de celle-ci, la tige (26) comprenant une languette de verrouillage (30) proximale à la tête (24) ; et
une ancre d'expansion (34) comprenant une partie de verrouillage (36) et un manchon d'expansion (38) s'étendant longitudinalement à partir de celle-ci, la partie de verrouillage (36) définissant une fente (50) pour la languette de verrouillage (30), le manchon d'expansion (38) comprenant des première et deuxième parties longitudinales (42, 44) qui sont espacées l'une de l'autre ;
dans lequel la rotation de la goupille (22) à l'intérieur de l'ancre d'expansion (34) amène la languette de verrouillage (30) à s'engager dans la fente (50) pour ainsi empêcher la rétraction de la goupille (22) de l'ancre d'expansion (34), dans lequel le manchon d'expansion (38) comprend un diamètre extérieur qui varie sur sa longueur et comprend un diamètre maximal, et dans lequel les première et deuxième parties longitudinales (42, 44) sont adaptées pour fléchir vers l'intérieur l'une vers l'autre lorsque l'ancre d'expansion (34) est insérée dans une ouverture pour ainsi diminuer temporairement le diamètre maximal du manchon d'expansion (38).

2. Ensemble de fixation à baïonnette (20) selon la revendication 1, dans lequel la goupille (22) comprend en outre un élément d'expansion (32) distal de la tête et s'étendant radialement à partir de la tige (26), et dans lequel la rotation de la goupille (22) à l'intérieur de l'ancre d'expansion (34) amène l'élément d'expansion (32) à engager au moins l'une des première et deuxième parties longitudinales (42, 44) pour ainsi étendre vers l'extérieur le manchon d'expansion (38).

3. Ensemble de fermeture à baïonnette (20) selon la revendication 2, dans lequel l'élément d'expansion (32) est une première came (64), et la tige (26) comprend en outre une deuxième came (68) opposée à la première came (64).

4. Ensemble de fermeture à baïonnette (20) selon la revendication 3, dans lequel la rotation de la goupille (22) à l'intérieur de l'ancre d'expansion (34) amène les première et deuxième cames (64, 68) à appuyer au maximum contre les première et deuxième parties longitudinales (42, 44), faisant fléchir vers l'extérieur les première et deuxième parties longitudinales (42, 44).

5. Ensemble de fixation à baïonnette (20) selon l'une quelconque des revendications 1 à 4, dans lequel la languette de verrouillage (30) comprend un bras s'étendant radialement depuis la tige (26) proximal à la tête (24).

6. Ensemble de fixation à baïonnette (20) selon l'une quelconque des revendications 1 à 5, dans lequel la fente (50) comprend un canal annulaire qui engage la languette de verrouillage (30) par encliquetage.

7. Ensemble de fixation à baïonnette (20) selon l'une quelconque des revendications 1 à 6, dans lequel la partie de verrouillage (36) limite la rotation de la languette de verrouillage (30) de sorte que la tige (26) soit logée d'une manière prédéterminée dans l'ancre d'expansion (34).

8. Ensemble de fixation à baïonnette (20) selon la revendication 1, dans lequel le diamètre maximal est situé à distance de la partie de verrouillage (36) le long de la longueur du manchon d'expansion.

9. Ensemble de fixation à baïonnette (20) selon l'une quelconque des revendications 1 à 8, dans lequel la partie de verrouillage (36) est en forme de disque et la fente (50) comprend des premier et second canaux opposés (70, 72) chacun défini dans des surfaces latérales annulaires de celui-ci.

10. Ensemble de fixation à baïonnette (20) selon la revendication 9, dans lequel les premier et deuxième canaux opposés (70, 72) coupent une ouverture centrale (40) s'étendant à travers l'ancre d'expansion (34).

11. Ensemble de fermeture à baïonnette (20) selon la revendication 9 ou 10, dans lequel la partie de verrouillage (36) comprend une première partie surélevée (52) disposée dans le premier canal (70) pour fixer la languette de verrouillage (30) par encliquetage.

12. Ensemble de fermeture à baïonnette (20) selon l'une quelconque des revendications 9 à 11, dans lequel la partie de verrouillage (36) comprend une deuxième partie surélevée disposée dans le deuxième canal (72) pour fixer la languette de verrouillage (30) par encliquetage.

13. Ensemble de fermeture à baïonnette (20) selon l'une quelconque des revendications 1 à 12, dans lequel la languette de verrouillage (30) est une première languette de verrouillage, la tige (26) comprenant en outre une deuxième languette de verrouillage opposée à la première languette de verrouillage.
